# EUROPÄISCHE PATENTSCHRIFT

(11) **EP 1 743 728 B1**
(45) Veröffentlichungstag und Bekanntmachung des Hinweises auf die Patenterteilung: **29.12.2010**
(21) Anmeldenummer: 05015490.5
(22) Anmeldetag: 16.07.2005
(51) Int. Cl.: B23K 26/26, B21B 15/00, B23K 26/38

(54) **Laser-Bandschweissmaschine und Verfahren zum Schweissen eines Bandes**
Laser strip welder and method of welding a strip
Appareil et méthode de soudage d'une bande par laser

(43) Veröffentlichungstag der Anmeldung: 17.01.2007
(73) Patentinhaber: Ideal-Werk C. & E. Jungeblodt GmbH & Co.KG, 59557 Lippstadt (DE)
(72) Erfinder: Jungeblodt, Clemens, Dipl.-Ing., 59555 Lippstadt (DE); Neumann, Manfred, Dipl.-Ing., 44532 Lünen (DE)
(74) Vertreter: Graefe, Jörg

(56) Entgegenhaltungen:
- GB-A- 2 064 384
- US-A- 3 909 578
- US-A1- 2003 015 568
- PATENT ABSTRACTS OF JAPAN Bd. 010, Nr. 083 (M-466), 2. April 1986 (1986-04-02) & JP 60 223686 A (MITSUBISHI DENKI KK), 8. November 1985 (1985-11-08)
- PATENT ABSTRACTS OF JAPAN Bd. 007, Nr. 165 (M-230), 20. Juli 1983 (1983-07-20) & JP 58 070978 A (MITSUBISHI DENKI KK), 27. April 1983 (1983-04-27)
- PATENT ABSTRACTS OF JAPAN Bd. 018, Nr. 663 (M-1723), 14. Dezember 1994 (1994-12-14) & JP 06 257984 A (MATSUSHITA REFRIG CO LTD), 16. September 1994 (1994-09-16)
- PATENT ABSTRACTS OF JAPAN Bd. 1996, Nr. 02, 29. Februar 1996 (1996-02-29) & JP 07 275905 A (NIPPON STEEL CORP), 24. Oktober 1995 (1995-10-24)
- PATENT ABSTRACTS OF JAPAN Bd. 2002, Nr. 12, 12. Dezember 2002 (2002-12-12) & JP 2002 219589 A (MITSUBISHI ELECTRIC CORP), 6. August 2002 (2002-08-06)

## Beschreibung

Die Erfindung betrifft eine Laser-Bandschweißmaschine zum Schweißen eines ersten Bandes und eines zweiten, nachfolgenden Bandes zu einem Band nach dem Oberbegriff des Anspruchs 1. Eine solche Bandschweißmaschine ist aus der JP 60 223 686 bekannt. Außerdem betrifft die Erfindung ein Verfahren zum Schweißen eines Bandes mit einer derartigen Bandscheißmaschine.

Die Anmelderin der vorliegenden Patentanmeldung stellt Bandschweißmaschinen zum Schweißen von Bandende mit nachfolgenden Bandanfang zu einem gemeinsamen Band her. Die Schweißungen können mittels verschiedener Lichtbogen-Schweißverfahren oder Widerstandsschweißverfähren ausgeführt werden; im vorliegenden Fall soll jedoch das Laser-Verfahren wegen der geringen Wärmeeinbringung, schmalen Wärmezone und geringen Überdicke zugrunde liegen. Eine Laser-Bandschweißmaschine der Anmelderin weist eine Schneidoptik mit Gasführung zum Beschneiden beider Bandenden und eine Schweißoptik zum Verbinden der Bandenden auf, welche über eine Strahlweiche in Position gebracht werden. Die Führung der Optiken erfolgt durch eine in X-, Y- und Z-Achse NC-gesteuerte Verstellung. Die zunächst parallel beschnittenen Bandenden werden zum Schweißen auf Stoß zusammen gefahren und geschweißt. Die so hergestellte Bandverbindung kann mittels der Schneidoptik auch mit Erkennungslöchern bzw. bei verschieden breiten Bändern mit geformten Anschäftungen versehen werden. Für ein Glättwalzen mit oberer und unterer Glättrolle muss das Band bzw. die Stoßstelle jedoch in eine weitere Position gefahren werden.

Für kontinuierliche Prozesse mit konstanter Prozessgeschwindigkeit darf der Bandablauf nicht behindert werden, dafür werden die Bänder nach der Schweißmaschine in Bandspeichern bevorratet. Es sind daher kürzest mögliche Prozesszeiten gefordert. Hier setzt die vorliegende Erfindung an.

Der Erfindung liegt die Aufgabe zugrunde, eine Bandschweißmaschine der eingangs genannten Art so zu verbessern, dass die Verweildauer des Bandes in der Bandschweißmaschine verringert wird.

Bei bekannten Laser-Bandschweißmaschinen werden zum Beschneiden und Verschweißen der Bandenden entweder Doppelschnitt-Scheren oder, wie oben beschrieben, Laser-Schneidoptiken mit gesteuerten NC-Führungen eingesetzt und der Schweißvorgang durch eine weitere Laseroptik angepasster Brennweite ausgeführt, jeweils mit geeigneten Schneid- bzw. Schweißgasen zum Austreiben des verflüssigten Materials bzw. Abdecken der Schweißzone gegen den Sauerstoffzutritt.

Der Laserstrahl tritt aus einem Laserkopf eines Strahlformers heraus und trifft auf das zu beschneidende Ende beziehungsweise die zu verschweißenden Enden. Der Laserstrahl wird von einem Strahlerzeuger erzeugt, der über eine Strahlführung mit dem Strahlformer verbunden ist. Zum Beschneiden beziehungsweise Verschweißen wird der Laserkopf des Strahlformers in der Bandtransportrichtung oder gegen die Bandtransportrichtung in verschiedene Positionen verschoben.

Dadurch verändert sich der Abstand zwischen dem Strahlformer und dem Strahlerzeuger. Der sich ändernde Abstand muss durch verschiedene Hilfsmittel in dem Strahlformer ausgeglichen werden, damit stets die gewünschten Bedingungen am Schneidbeziehungsweise Schweißpunkt vorliegen. Dazu sind zum Teil recht aufwändige Spiegel- und Linsenkonstruktionen notwendig. Dieses macht die bisherigen Bandschweißmaschinen aufwändig.

Auch hier setzt die vorliegende Erfindung an.

Der vorliegenden Erfindung liegt ferner die Aufgabe zugrunde, eine Bandschweißmaschine der eingangs genannten Art so zu verbessern, dass Hilfsmittel im Strahlformer wie Anordnungen aus: Spiegeln Und Linsen zum Ausgleich sich ändernder Abstände zwischen Strahlerzeuger und Strahlformer möglichst überflüssig werden.

Diese Aufgaben werden durch eine Bandschweißmaschine nach Anspruch 1 gelöst.

Die erfindungsgemäße Bandschweißmaschine ist so ausgestaltet, dass der die Länge des Strahlwegs vom Strahlerzeuger zum Strahlformer in jeder Position des Strahlformers beziehungsweise eines Teils des Strahlformers gleich ist. Die optischen Eigenschaften bleiben dadurch weitgehend unverändert wenn der Strahlformer beziehungsweise ein Teil des Strahlformers in eine andere Position gebracht werden, da das verschwenkte Teil des Strahlformers immer im gleichen Radius zum Schwenkmittelpunkt bewegt wird.

Die Führung des Schneid- und Schweißkopfes quer über die zu schweißenden Bandenden erfolgt über das gleiche Führungsmittel, damit die für einen Laser notwendige Präzision erzielt wird. Beispielsweise hat ein Laserschnitt bei einer Bandstärke von 0,8 mm Stahlband eine Breite von nur ca. 0,15 mm, so dass geringe Führungsdifferenzen die Strahlverteilung auf die Bandenden negativ beeinflussen kann.

Zum Schneiden der ein- bzw. auslaufseitigen Bandenden nach dem mittigen Zusammenführen der vorgeschnittenen Bandenden kann die Optik in eine Mittelposition für den Schweißvorgang geschwenkt werden. Eventuell erforderliche Brennweitenveränderungen werden durch spezielle Fokussierersysteme ausgeführt. Die optischen Eigenschaften des Laserstrahls werden durch das Schwenken des Laserkopfes im gleichen Radius zum Schwenkmittelpunkt unverändert erhalten.

Eine erfindungsgemäße Maschine kann ein Maschinenbett aufweisen, auf welchem das erste beziehungsweise die ersten Führungsmittel der gemeinsamen Führung der ersten und der zweiten Vorrichtung angebracht sind.

Die erste Vorrichtung und die zweite Vorrichtung können jeweils ein zweites Führungsmittel der gemeinsamen Führung aufweisen, die mit dem ersten Führungsmittel im Betrieb der Bandschweißmaschine zusammenwirken. Die Führung ist übrigens vorzugsweise eine Linearführung.

Die zweiten Führungsmittel der ersten Vorrichtung und der zweiten Vorrichtung sind in Richtung der Führung hintereinander auf dem ersten Führungsmittel angeordnet. Die zweiten Führungsmittel der ersten Vorrichtung und der zweiten Vorrichtung können einen zumindest teilweise gleichen Fahrweg aufweisen. Das erste Führungsmittel kann eine Führungsschiene und die zweiten Führungsmittel können auf der Führungsschiene verfahrbare Schlitten sein.

Auch die zweite Vorrichtung kann einen auskragenden Arm umfassen, an dessen freiem Ende Werkzeuge zum Beispiel zur Nachbehandlung der Schweißnaht oder zur Kontrolle der Schweißnaht angebracht sind. Der auskragende Arm der zweiten Vorrichtung ist vorzugsweise oberhalb einer Ebene verschiebbar angeordnet, in welcher das herzustellende Band angeordnet ist. Die zweite Vorrichtung kann außerdem einen unteren Arm aufweisen, der parallel zu dem auskragenden oberen Arm der zweiten Vorrichtung unterhalb der Ebene des herzustellenden Bandes verschiebbar angeordnet ist. Beide Arme der zweiten Vorrichtungen können Teil eines im Wesentlichen C-förmigen Teils sein, welches mit seiner Unterseite unter Zwischenschaltung der zweiten Führungsmittel auf dem ersten Führungsmittel verschiebbar angeordnet ist. An dem unteren Arm der zweiten Vorrichtung können ebenfalls Werkzeuge angebracht sein.

Diese Werkzeuge können zum Teil mit dem an dem oberen Arm angebrachten Werkzeugen zusammenwirken. Bei den Werkzeugen kann es sich beispielsweise um Glättrollen, Absaugeinrichtungen, Inspektions- beziehungsweise Kontrollmittel, Mittel zum Nachglühen der Schweißnaht oder ähnliches handeln.

Eine erfindungsgemäße Vorrichtung kann Halte- und Verfahrvorrichtungen zum Fixieren und Verfahren der Bandenden beziehungsweise des Bandendes während des Schneidens, Schweißens und/oder einer weiteren Bearbeitung aufweisen.

Die Trennung der ersten und zweiten Vorrichtungen hat den Vorteil, dass die erste Vorrichtung als Laserführungssystem mit geringer Masse für hohe Fahrgeschwindigkeiten und unbeinflusst von Belastungskräften ausgeführt werden kann, während die zweite Vorrichtung, die obere und untere Glättwalze und weitere Nahtnachbearbeitungsstationen aufnimmt, die die Schweißnaht fertig stellen.

Ein Ausführungsbeispiel für eine erfindungsgemäße Bandschweißmaschine und ein Verfahren zum Betreiben der Bandschweißmaschine sind anhand der Zeichnung näher erläutert. Es zeigen
- Fig. 1: eine Ansicht der Bandschweißmaschine in einer Ausgangsstellung mit Bezugszeichen,
- Fig. 2: die Ansicht aus Fig. 1, jedoch ohne Bezugszeichen,
- Fig. 3: die Bandschweißmaschine während des Abschneidens eines Bandendes eines ersten Bandes,
- Fig. 4: eine Stellung der Bandschweißmaschine während des Abschneidens eines Bandendes eines zweiten Bandes,
- Fig. 5: eine Stellung nach dem Abschneiden der Bandenden und vor dem Verschweißen der beiden Bänder und
- Fig. 6: eine Stellung der Bandschweißmaschine während des Verschweißens und Nachbearbeitens der Schweißnaht.

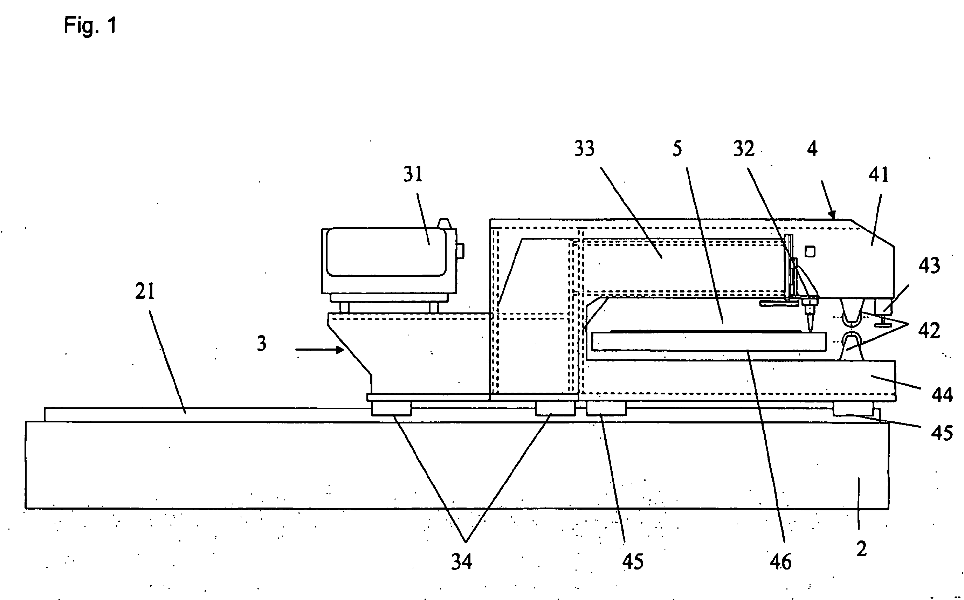

In den Fig. 1 bis 5 ist die Bandschweißmaschine in Ansichten aus Richtung des Bandtransports schematisch dargestellt. Haltevorrichtungen zum Halten des Bandes beziehungsweise der zu verschweißenden Bandenden sind in den Figuren der Klarheit wegen nicht dargestellt.

Die Darstellungen der Bandschweißmaschine in den Fig. 1 bis 6 zeigen ein Maschinenbett 2, auf welchem ein erstes Führungsmittel 21, welches durch eine Führungsschiene gebildet wird, angebracht ist. Auf der Führungsschiene 21 sind eine erste Vorrichtung 3 zum Beschneiden und zum Verschweißen der Bandenden der zu verschweißenden Bänder 5 und eine zweite Vorrichtung 4 zum Behandeln der Schweißnaht und/oder der verschweißten Bandenden linear verschiebbar. '

Die erste Vorrichtung 3 zum Beschneiden und Verschweißen der Bandenden weist einen Strahlerzeuger 31 zum Erzeugen eines Laserstrahls auf. Dieser Laserstrahl wird durch eine Strahlführung zu einem Strahlformer 32 geleitet, wo der Strahl geformt und über einen Laserkopf zum Bearbeiten der Bänder gebündelt und umgelenkt wird. Der Strahlformer 32 ist an einem freien Ende eines auskragenden Arms 33 der ersten Vorrichtung 3 angebracht. Dieser Arm 33 übergreift die zu verschweißenden Bänder 5 so dass das Band über die gesamte Breite bearbeitet werden kann. Die erste Vorrichtung 3 weist an ihrer Unterseite zwei Schlitten 34 auf, die zweite Führungsmittel bilden und auf der Führungsschiene 21 verschiebbar sind.

Die zweite Vorrichtung 4 zum Behandeln der Schweißnaht und/oder der verschweißten Bandenden ist in der Seitenansicht C-förmig ausgebildet und weist einen oberen Arm 41 und einen unteren Arm 44 auf. An der Unterseite des unteren Arms 44 sind zwei Schlitten 45 angebracht, die zweite Führungsmittel der zweiten Vorrichtung 4 bilden und auf der Führungsschiene 21 verschiebbar angeordnet sind. Der obere Arm 41 und der untere Arm 44 der zweiten Vorrichtung 4 sind oberhalb beziehungsweise unterhalb der Bänder 5 beziehungsweise des verschweißten Bandes 6 angeordnet und übergreifen beziehungsweise untergreifen die Bänder 5 beziehungsweise das verschweißte Band 6. An den freien Enden der Arme 41, 44 sind Werkzeuge 42, 43 zum Behandeln der Schweißnaht angebracht. Es handelt sich dabei zum einen um Glättrollen 42 und um einen Glühkopf 43. Die Glättrollen sind als obere und untere Werkzeuge ausgeführt und an dem oberen Arm 41 beziehungsweise dem unteren Arm 44 einander gegenüberliegend angebracht. Der Glühkopf 43 ist dagegen nur als oberes Werkzeug ausgeführt.

Der obere Arm 41 der zweiten Vorrichtung 4 ist so ausgebildet, dass der auskragende Arm 33 der ersten Vorrichtung 3 in den oberen Arm 41 der zweiten Vorrichtung 4 eingreifen beziehungsweise einfahren kann. Der obere Arm 41 der zweiten Vorrichtung 4 weist dazu einen Spalt (nicht näher dargestellt) auf.

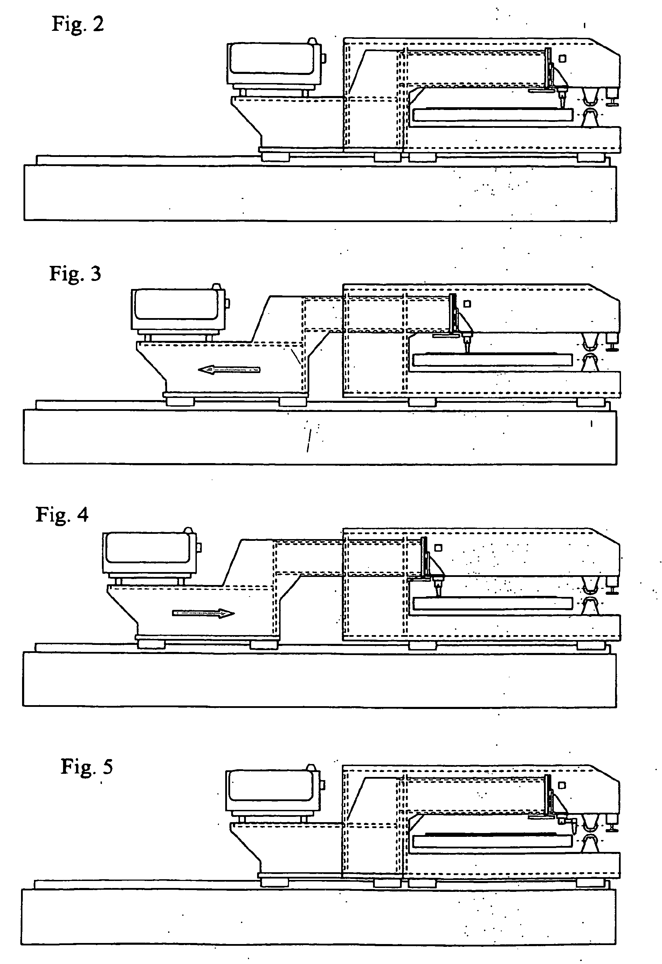

Die in den Fig. 1 bis 6 dargestellte Bandschweißmaschine 1 kann folgendermaßen zum Verschweißen zweier Bänder 5 an ihren Bandenden zu einem Band 6 verwendet werden. Zunächst werden sowohl die erste Vorrichtung 3 als auch die zweite Vorrichtung 4 in eine Ausgangsstellung gefahren. Sowohl der auskragende Arm 33 der ersten Vorrichtung 3 als auch der obere Arm 41 der zweiten Vorrichtung 4 übergreifen dazu die Bandenden. Der Laserkopf des Strahlenformers 32 wird in eine Position geschwenkt, mit der das Bandende des auslaufenden Bandes 5 beschnitten werden kann. Dazu wird zum einen nach dem Verschwenken der Strahlerzeuger eingeschaltet und die erste Vorrichtung 3 in Pfeilrichtung (Fig. 2) verschoben. Der Laserstrahl, der aus dem Laserkopf des Strahlformers 32 austritt, wird dadurch entlang des Bandendes geführt und schneidet das Bandende ab. Die Kontur des abgeschnittenen Bandendes 5 wird dabei von dem Verlauf der Führung 21, 34 vorgegeben.

Ist das Bandende des auslaufenden Bandes beschnitten, schwenkt er Laserkopf des Strahlformers 32 um einen Winkel, damit das Bandende des einlaufenden Bandes 5 beschnitten werden kann. Ist der Laserkopf in die Position verschwenkt worden, fährt die erste Vorrichtung 3 in Pfeilrichtung (Fig. 3) und führt den Laserstrahl entlang des Bandendes des einlaufenden Bandes 5. Sobald die erste Vorrichtung 3 die Ausgangsposition (Fig. 4) wieder erreicht hat, wird der Laserkopf des Strahlformers 32 in eine mittlere Position geschwenkt.

Die Bandenden des einlaufenden und des auslaufenden Bandes 5 haben nun jeweils eine Kontur, die dem Verlauf der Führung 21, 34 entspricht. Die Konturen der beiden Bandenden verlaufen dabei jederzeit parallel zueinander. Die abgeschnittenen Reste der Bänder 5 fallen nach dem Abschneiden jeweils in einen Schrottkasten 46, der unterhalb der Ebene der Bänder 5, 6 angeordnet ist und Teil der zweiten Vorrichtung 4 ist. Durch das Laserschneiden erwärmtes und herabtropfendes Material der Bänder 5 fällt ebenfalls in den Schrottkasten 46.

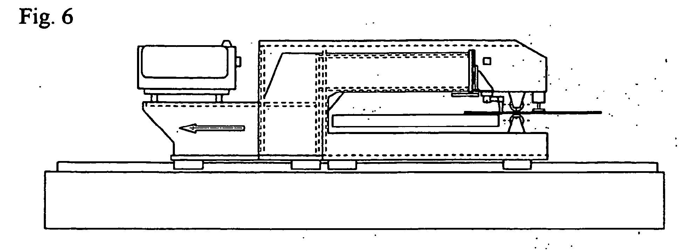

Nach dem Beschneiden der Bandenden werden diese Bandenden der Bänder 5 auf Stoß gegeneinander gefahren (nicht dargestellt). Liegen die Bandenden auf Stoß aneinander, kann der Schweißvorgang begonnen werden. Dazu wird die erste Vorrichtung 3 nach Einschalten des Strahlerzeugers 31 erneut in Pfeilrichtung (Fig. 6) verschoben. Der Laserstrahl wird dabei über die aneinander stoßenden Bandenden der Bänder 5 geführt, welche durch den Laserstrahl verschweißt werden, so dass sich das Band 6 ergibt. Gleichzeitig mit der ersten Vorrichtung 3 wird auch die zweite Vorrichtung 4 in Richtung des Pfeils verschoben. Dieses bewirkt, dass die Glättrollen und der Glühkopf unmittelbar nach Herstellen der Schweißnaht über die Schweißnaht geführt werden, um diese nachzubehandeln. Auch der Schrottkasten 46 wird in die Pfeilrichtung verschoben und wird nach dem Abschluss des Schweißens in der Endposition in der zweiten Vorrichtung 4 ausgeleert. Danach werden sowohl die erste Vorrichtung 3 als auch die zweite Vorrichtung 4 zurück in die Ausgangsposition (Fig. 1) gefahren. Die Bänder 5 sind zu einem gemeinsamen Band 6 verschweißt und dieses gemeinsame Band 6 kann zur weiteren Verarbeitung aus der Bandschweißmaschine 1 ablaufen.

## Patentansprüche

1. Bandschweißmaschine (1) zum Schweißen eines ersten Bandes (5) und eines zweiten Bandes (5) zu einem Band (6) mittels eines Laserstrahls,
- mit einer ersten Vorrichtung (3) zum Beschneiden und zum Schweißen der Bandenden,
- mit einer zweiten Vorrichtung (4) zum Behandeln der Schweißnaht und/oder der geschweißten Bandenden,
**dadurch gekennzeichnet,**
**dass** die erste Vorrichtung (3) für den Laserstrahl einen Strahlerzeuger (31) und einen Strahlformer (32) aufweist und der Strahlformer (32) zum Beschneiden und zum Schweißen zum Teil in verschiedene Positionen bewegbar ist und wobei die Länge des Strahlwegs vom Strahlerzeuger (31) zum Strahlformer (32) in jeder Position gleich ist und
**dass** der Strahlformer (32) verschwenkbar ist.

2. Bandschweißmaschine (1) nach Anspruch 1, **dadurch gekennzeichnet, dass** die erste Vorrichtung (3) und die zweite Vorrichtung (4) gemeinsam zum Schweißen beziehungsweise Nachbehandeln der Schweißnaht und/oder der geschweißten Bandenden vorzugsweise auf einem gemeinsamen ersten Führungsmittel verfahrbar sind.

3. Bandschweißmaschine (1) nach Anspruch 2, **dadurch gekennzeichnet, dass** die Bandschweißmaschine (1) ein Maschinenbett (2) aufweist, an welchem die ersten Führungsmittel (21) der gemeinsamen Führung angebracht sind.

4. Bandschweißmaschine nach Anspruch 3, **dadurch gekennzeichnet, dass** die erste Vorrichtung (3) und die zweite Vorrichtung (4) jeweils zweite Führungsmittel (34, 45) der Führung aufweisen, die mit den ersten Führungsmitteln (21) im Betrieb der Bandschweißmaschine (1) zusammenwirken.

5. Bandschweißmaschine nach einem der Ansprüche 1 bis 4, **dadurch gekennzeichnet, dass** die Führung eine Linearführung ist.

6. Bandschweißmaschine nach Anspruch 5, **dadurch gekennzeichnet, dass** die zweiten Führungsmittel (34, 45) der ersten Vorrichtung (3) und der zweiten Vorrichtung (4) in Richtung der Führung hintereinander angeordnet sind.

7. Bandschweißmaschine nach einem der Ansprüche 2 bis 6, **dadurch gekennzeichnet, dass** die zweiten Führungsmittel (34, 45) der ersten Vorrichtung (3) und der zweiten Vorrichtung (4) einen zumindest teilweise gleichen Fahrweg aufweisen.

8. Bandschweißmaschine nach einem der Ansprüche 1 bis 7, **dadurch gekennzeichnet, dass** die zweite Vorrichtung (4) einen auskragenden Arm (41) umfasst, an dessen freien Ende Werkzeuge (42, 43) angebracht sind.

9. Bandschweißmaschine nach Anspruch 8, **dadurch gekennzeichnet, dass** der auskragende Arm (41) der zweiten Vorrichtung (4) oberhalb einer Ebene des herzustellenden Bandes (6) verschiebbar angeordnet ist.

10. Bandschweißmaschine nach Anspruch 8 oder 9, **dadurch gekennzeichnet, dass** die zweite Vorrichtung (4) einen unteren Arm (44) aufweist, der parallel zu dem auskragenden Arm der zweiten Vorrichtung unterhalb der Ebene des herzustellenden Bandes (6) verschiebbar angeordnet ist.

11. Bandschweißmaschine nach Anspruch 10, **dadurch gekennzeichnet, dass** an dem unteren Arm (44) ein oder mehrere Werkzeuge (42) angebracht sind.

12. Bandschweißmaschine nach Anspruch 11, **dadurch gekennzeichnet, dass** die an dem unteren Arm (44) angebrachten Werkzeuge (42) zum Teil mit an dem oberen Arm (41) angebrachten Werkzeugen (42) zusammenwirken.

13. Bandschweißmaschine nach einem der Ansprüche 8 bis 12, **dadurch gekennzeichnet, dass** die Werkzeuge Glättrollen (42), Absaugeinrichtungen, Inspektionsmittel, Glühmittel (43) und/oder ähnliches umfassen.

14. Bandschweißmaschine nach einem der Ansprüche 1 bis 13, **dadurch gekennzeichnet, dass** die Bandschweißmaschine Haltevorrichtungen zum Fixieren der Bandenden beziehungsweise des Bandes (6) während des Schneidens, Schweißens und/oder einer weiteren Bearbeitung aufweist.

15. Verfahren zum Schweißen eines Bandes aus zwei Bändern mit einer Bandschweißmaschine nach einem der Ansprüche 1 bis 14, **dadurch gekennzeichnet, dass**
- in einem ersten Schritt ein erstes Bandende beschnitten wird,
- in einem zweiten Schritt ein zweites Bandende beschnitten wird,
- in einem dritten Schritt die Bandenden auf Stoß zusammengefahren werden,
- in einem vierten Schritt die Bandenden geschweißt und zugleich nachbehandelt werden und
- in einem fünften Schritt das durch das Schweißen hergestellte Band aus der Maschine abgeführt wird.

## Claims

1. Strip welder (1) for welding a first strip (5) and a second strip (5) to form one strip (6) by means of a laser beam,
- having a first device (3) for cutting and for welding the strip ends,
- having a second device (4) for treating the weld and/or the welded strip ends,
**characterized**
**in that** the first device (3) has a beam generator (31) and a beam shaper (32) for the laser beam, and the beam shaper (32) can to some extent be moved into various positions for the purpose of cutting and welding, and the length of the beam path from the beam generator (31) to the beam shaper (32) being the same in each position, and
**in that** the beam shaper (32) can be pivoted.

2. Strip welder (1) according to Claim 1, **characterized in that** the first device (3) and the second device (4) can be moved jointly for the welding or post-treatment of the weld, and/or the welded strip ends can preferably be moved on a common first guide means.

3. Strip welder (1) according to Claim 2, **characterized in that** the strip welder (1) has a machine bed (2), to which the first guide means (21) belonging to the common guide are attached.

4. Strip welder according to Claim 3, **characterized in that** the first device (3) and the second device (4) each have second guide means (34, 45) belonging to the guide, which interact with the first guide means (21) during the operation of the strip welder (1).

5. Strip welder according to one of Claims 1 to 4, **characterized in that** the guide is a linear guide.

6. Strip welder according to Claim 5, **characterized in that** the second guide means (34, 45) of the first device (3) and of the second device (4) are arranged one after the other in the direction of the guide.

7. Strip welder according to one of Claims 2 to 6, **characterized in that** the second guide means (34, 45) of the first device (3) and of the second device (4) have an at least partly identical travel.

8. Strip welder according to one of Claims 1 to 7, **characterized in that** the second device (4) has a projecting arm (41), to the free end of which tools (42, 43) are attached.

9. Strip welder according to Claim 8, **characterized in that** the projecting arm (41) of the second device (4) is arranged such that it can be displaced above a plane of the strip (6) to be produced.

10. Strip welder according to Claim 8 or 9, **characterized in that** the second device (4) has a lower arm (44), which is arranged such that it can be displaced parallel to the projecting arm of the second device, below the plane of the strip (6) to be produced.

11. Strip welder according to Claim 10, **characterized in that** one or more tools (42) are attached to the lower arm (44).

12. Strip welder according to Claim 11, **characterized in that** the tools (42) attached to the lower arm (44) interact to some extent with tools (42) attached to the upper arm (41).

13. Strip welder according to one of Claims 8 to 12, **characterized in that** the tools comprise smoothing rollers (42), extraction equipment, inspection means, annealing means (43) and/or the like.

14. Strip welder according to one of Claims 1 to 13, **characterized in that** the strip welder has holding devices for fixing the strip ends and/or the strip (6) respectively during the cutting, welding and/or further processing.

15. Method of welding a strip from two strips by using a strip welder according to one of Claims 1 to 14, **characterized in that**
- in a first step, a first strip end is cut,
- in a second step, a second strip end is cut,
- in a third step, the strip ends are moved together so as to butt against each other,
- in a fourth step, the strip ends are welded and at the same time post-treated, and
- in a fifth step, the strip produced by the welding is led away out of the machine.

## Revendications

1. Machine (1) de soudage de bandes destinée à souder au moyen d'un faisceau laser une première bande (5) et une deuxième bande (5) pour former une bande (6), et présentant
- un premier dispositif (3) de découpe et de soudage des extrémités des bandes et
- un deuxième dispositif (4) de traitement du cordon de soudure et/ou des extrémités soudées des bandes,
**caractérisée en ce que**
le premier dispositif (3) présente pour le faisceau laser un dispositif (31) de formation d'un faisceau et un dispositif (32) de mise en forme du faisceau,
**en ce que** certaines parties du dispositif (32) de mise en forme du faisceau peuvent être déplacées dans différentes positions pour découper et pour souder,
**en ce que** la longueur du parcours du faisceau entre le dispositif (31) de formation de faisceau et le dispositif (32) de mise en forme du faisceau est identique dans chaque position et
**en ce que** le dispositif (32) de mise en forme du faisceau peut pivoter.

2. Machine (1) de soudage de bandes selon la revendication 1, **caractérisée en ce que** le premier dispositif (3) et le deuxième dispositif (4) peuvent être déplacés ensemble de préférence sur un premier moyen commun de guidage pour souder ou assurer la finition du cordon de soudure et/ou des extrémités soudées des bandes,

3. Machine (1) de soudage de bandes selon la revendication 2, **caractérisée en ce que** la machine (1) de soudage de bandes présente un socle (2) de machine sur lequel les premiers moyens de guidage (21) du guide commun sont installés.

4. Machine de soudage de bandes selon la revendication 3, **caractérisée en ce que** le premier dispositif (3) et le deuxième dispositif (4) présentent tous deux des deuxièmes moyens de guidage (34, 45) du guide qui coopèrent avec les premiers moyens de guidage (21) lorsque la machine (1) de soudage de bandes est en fonctionnement.

5. Machine de soudage de bandes selon l'une des revendications 1 à 4, **caractérisée en ce que** le guide est un guide linéaire.

6. Machine de soudage de bandes selon la revendication 5, **caractérisée en ce que** les deuxièmes moyens de guidage (34, 45) du premier dispositif (3) et du deuxième dispositif (4) sont disposés l'un à la suite de l'autre dans la direction du guide.

7. Machine de soudage de bandes selon l'une des revendications 2 à 6, **caractérisée en ce qu'**au moins certaines parties du parcours de déplacement des deuxièmes moyens de guidage (34, 45) du premier dispositif (3) et du deuxième dispositif (4) sont identiques.

8. Machine de soudage de bandes selon l'une des revendications 1 à 7, **caractérisée en ce que** le deuxième dispositif (4) comporte un bras (41) en débord à l'extrémité libre duquel sont placés des outils (42, 43).

9. Machine de soudage de bandes selon la revendication 8, **caractérisée en ce que** le bras (41) en débord du deuxième dispositif (4) est disposé à coulissement au-dessus d'un plan de la bande (6) à fabriquer.

10. Machine de soudage de bandes selon les revendications 8 ou 9, **caractérisée en ce que** le deuxième dispositif (4) présente un bras inférieur (44) qui est disposé à coulissement parallèle au bras en débord du deuxième dispositif, en dessous du plan de la bande (6) à fabriquer.

11. Machine de soudage de bandes selon la revendication 10, **caractérisée en ce qu'**un ou plusieurs outils (42) sont installés sur le bras inférieur (44).

12. Machine de soudage de bandes selon la revendication 11, **caractérisée en ce que** certains des outils (42) installés sur le bras inférieur (44) coopèrent avec des outils (42) installés sur le bras supérieur (41).

13. Machine de soudage de bandes selon l'une des revendications 8 à 12, **caractérisée en ce que** les outils comprennent des galets de lissage (42), un dispositif d'aspiration, des moyens d'inspection, des moyens de cuisson (43) et/ou des moyens similaires.

14. Machine de soudage de bandes selon l'une des revendications 1 à 13, **caractérisée en ce que** la machine de soudage de bandes présente des dispositifs de maintien qui fixent les extrémités des bandes ou la bande (6) pendant la découpe, le soudage et/ou un autre traitement.

15. Procédé de soudage d'une bande constituée de deux bandes à l'aide d'une machine de soudage de bandes selon l'une des revendications 1 à 14,
**caractérisé en ce que**
dans une première étape, une première extrémité de bande est découpée,
dans une deuxième étape, une deuxième extrémité de bande est découpée,
dans une troisième étape, les extrémités de bandes sont rapprochées bout-à-bout,
dans une quatrième étape, les extrémités de bandes sont soudées et en même temps reçoivent un traitement de finition et
dans une cinquième étape, la bande fabriquée par soudage est évacuée de la machine.
